# EUROPÄISCHE PATENTANMELDUNG

(11) **EP 2 541 691 A1**
(43) Veröffentlichungstag der Anmeldung: **02.01.2013**
(21) Anmeldenummer: 11305825.9
(22) Anmeldetag: 29.06.2011
(51) Int. Cl.: H01R 13/504, H01R 43/00, G01M 3/26, G01R 31/04, B29C 45/14

(54) **Kabel mit spritzgegossenem Kupplungsteil**

(71) Anmelder: Nexans, 75008 Paris (FR)
(72) Erfinder: Nachbauer, Otto, 92685 Floss (DE); Völkl, Dietmar, 95703 Ploessberg (DE); Noetzel, Thomas, 92685 Floss (DE)
(74) Vertreter: Taruttis, Stefan Georg

(57) **Zusammenfassung**

Die Erfindung betrifft ein Kabel, das ein spritzgegossenes Kupplungsteil (2) aufweist, das aus einer Polymermischung mit einem Thermoplasten als Polymerbestandteil hergestellt ist, wobei sich das Kabel dadurch auszeichnet, dass der Mantel (1) strahlenvernetztes thermoplastisches Polyurethan enthält. Das Kabel weist eine wasserdichte und feste Verbindung zwischen dem Mantel (1) des Kabels und dem um den Mantel (1) umspritzten Abschnitt des Kupplungsteils (2) auf.

## Beschreibung

### Kabel mit spritzgegossenem Kupplungsteil

Die vorliegende Erfindung betrifft ein Kupplungsteil für Kabel, sowie ein erfindungsgemäßes Kupplungsteil mit einem daran angeschlossenen Kabel und ein Verfahren zur Anordnung bzw. Herstellung des Kupplungsteils an dem Kabel, bzw. ein Verfahren zur Herstellung eines Kupplungsteils mit daran angeschlossenem Kabel, wobei das Kabel einen hochtemperaturfesten Mantel aufweist. Bevorzugt weist das Kabel einen Mantel aus einer Polymermischung auf, deren Polymerbestandteil thermoplastisches Polyurethan aufweist oder daraus besteht. Ein solches Kupplungsteil, auch als Stecker bezeichnet, weist für einzelne Leiter eines angeschlossenen Kabels einen Kontakt auf, der in einer Ausnehmung bzw. Bohrung eines Kontaktträgers angeordnet ist. Die in voneinander getrennten Ausnehmungen des Kontaktträgers angeordneten Kontakte sind von einer Kontaktseite des Kupplungsteils zugänglich und auf der gegenüberliegenden Anschlußseite des Kontaktträgers von den Leitern kontaktiert. Die Leiter sind einschließlich eines abgemantelten Abschnitts, vorzugsweise einschließlich eines Kabelabschnitts mit Mantel, von einem spritzgegossenen Kupplungsteil umfasst, der an die Anschlußseite des Kontaktträgers angrenzen kann und/oder optional den Kontaktträger abschnittsweise oder vollständig umfassen kann. Optional kann der Kontaktträger einstückig mit dem spritzgegossenen Kupplungsteil ausgebildet sein und z.B. dadurch hergestellt werden, dass Kontakte in einer Spritzgußform abschnittsweise unmittelbar mit der Masse umspritzt werden, die das spritzgegossene Kupplungsteil bildet.

Das erfindungsgemäße Kupplungsteil zeichnet sich dadurch aus, dass es an dem Ende, an dem das Kabel in das Kupplungsteil eintritt, eine wasserdichte Verbindung zum Mantel des Kabels ausbildet.

### Stand der Technik

Die DE 3417811 C1 beschreibt ein Verfahren zum Anbringen eines Kupplungsteils in einer elektrischen Leitung, bei dem ein Steckerkörper aus Polyethylen, Polyurethan oder Polyvinylchlorid einen endständigen Abschnitt des Kabelmantels umfasst.

Die DE 19754236 A1 beschreibt einen Schrumpfschlauch aus PE oder PP, der zur Haftungsverbesserung zwischen einem Kabelmantel aus PVC und einem umspritzten Stecker angeordnet wird.

### Aufgabe der Erfindung

Die Aufgabe der Erfindung liegt in der Bereitstellung eines Kabels mit einem daran angeschlossenen Kupplungsteil, das feuchtigkeitsdicht am Mantel anliegt, insbesondere eine stoffschlüssige Verbindung mit dem Mantel eingeht, wobei besonders bevorzugt der Mantel temperaturbeständig ist.

### Allgemeine Beschreibung der Erfindung

Die Erfindung löst die Aufgabe mit den Merkmalen der Ansprüche, insbesondere mit einem Kabel, das ein spritzgegossenes Kupplungsteil aufweist, das aus einer Polymermischung mit einem Thermoplasten als Polymerbestandteil und ggf. organischen und/oder mineralischen Füllstoffen hergestellt ist, wobei sich das Kabel dadurch auszeichnet, dass der Mantel aus einer Polymermischung besteht, deren Polymerbestandteil strahlenvernetztes thermoplastisches Polyurethan enthält oder daraus besteht, und bevorzugt besteht der Mantel des Kabels aus strahlenvernetztem thermoplastischen Polyurethan, das z.B. im Wesentlichen keine mineralischen Füllstoffe enthält. Es hat sich gezeigt, dass ein Kabel, dessen Mantel erfindungsgemäß aus einer Polymermischung besteht, deren Polymerbestandteil thermoplastisches Polyurethan aufweist oder daraus besteht, beim Umspritzen mit einer thermoplastischen Polymermischung, die das Kupplungsteil bildet, eine wasserdichte und feste Verbindung zwischen dem Mantel des Kabels und dem um den Mantel umspritzten Abschnitt des Kupplungsteils erzeugt wird. Entsprechend weist das Kabel ein den Mantel umfassendes spritzgegossenes Kupplungsteil aus einer Polymermischung auf, wobei die wasserdichte Verbindung zwischen Mantel und Kupplungsteil durch den unmittelbaren Kontakt zwischen Mantel und Kupplungsteil ausgebildet ist, bzw. aus der stoffschlüssigen Verbindung des Kupplungsteils mit dem Mantel besteht.

Die Erfindung richtet sich auch auf die Verwendung des Kabels mit einem daran aus einer thermoplastischen Polymermischung angespritzten Kupplungsteil, wobei das Kabel einen Mantel aus einer Polymermischung aufweist, deren Polymerbestandteil thermoplastisches Polyurethan aufweist oder daraus besteht, als eine temperaturbeständige Anschlussleitung, insbesondere als Anschlussleitung für eine Temperaturbelastung bis 200°C, insbesondere bis 220°C für bis zu 30 Minuten, vorzugsweise bis zu 1 Stunde, bevorzugter zumindest 1 Stunde, z.B. 70 bis 120 oder bis 90 min, insbesondere als wasserdichte bzw. feuchtigkeitsdichte temperaturbeständige Anschlussleitung.

Weiterhin betrifft die Erfindung ein Verfahren zur Herstellung des erfindungsgemäßen Kabels, das sich durch das Herstellen des Kupplungsteils durch Spritzguss einer Polymermischung direkt auf einen umfänglich geschlossenen Abschnitt des Mantels auszeichnet, deren Polymerbestandteil, der beispielsweise thermoplastisches Polyurethan, Polyamid oder Polybutylenterephthalat enthält oder daraus besteht, wobei der Mantel des Kabels aus einer Polymermischung besteht, deren Polymerbestandteil strahlenvernetztes thermoplastisches Polyurethan aufweist oder daraus besteht. Erfindungsgemäß wird eine stoffschlüssige, wasserdichte bzw. feuchtigkeitsdichte und vorzugsweise temperaturbeständige Verbindung zwischen dem Mantel mit oder aus strahlenvernetztem thermoplastischen Polyurethan und dem Kupplungsteil durch das direkte Umspritzen des Mantels mit der Polymermischung des Kupplungsteils erzeugt, die einen thermoplastischen Polymerbestandteil enthält oder daraus besteht.

Besonders bevorzugt weist das Kabel eine oder mehrere Adern auf, deren Leiter endständig mit einem elektrisch leitenden Kontaktstück verbunden sind, wobei das Kupplungsteil die Kontaktstücke in Ausnehmungen hält und einstückig ausgebildet ist. In dieser Ausftihrungsform besteht das Kabel mit dem Kupplungsteil an seinem einen Ende aus einem endständigen Kabelabschnitt und dem einstückigen Kupplungsteil, das einen Abschnitt des Mantels unmittelbar umschließt und mit dem Mantel eine feuchtigkeitsdichte Verbindung eingeht und den in Ausnehmungen des Kupplungsteils angeordneten Kontaktstücken, die endständig an den Leitern des Kabels angeordnet sind.

Die thermoplastische Polymermischung, die das Kupplungsteil bildet, weist auf oder besteht aus einem der Thermoplasten aus der Gruppe, die Polyamid, thermoplastisches Polyurethan, Polybuthylenterephthalat und Mischungen dieser umfasst oder daraus besteht. Wahlweise kann die Polymermischung des Kupplungsteils auch organische Zuschlagsstoffe enthalten, insbesondere Antioxidationsmittel, Alterungsschutzmittel und Farbstoffe, sowie mineralische Zuschlagsstoffe, insbesondere Glasfasern, Glaskugeln.

Das Kabel weist vorzugsweise einen Mantel aus einer Polymermischung auf, deren Polymerbestandteil strahlenvernetztes thermoplastisches Polyurethan aufweist, oder aus strahlenvernetztem thermoplastischem Polyurethan besteht. Das strahlenvernetzte thermoplastische Polyurethan hat vorzugsweise die folgenden Eigenschaften: Temperaturbeständigkeit bis 220°C für zumindest 1 Stunde, insbesondere für bis zu 10 Zyklen bei einer Temperatur von 220°C für jeweils 1 Stunde, bevorzugt in Kombination mit einer Dauertemperaturbeständigkeit von -40°C bis 150°C für 3000 h.

Dabei wird die Temperaturbeständigkeit mit dem folgenden Verfahren bestimmt: Das Kabel wird 10 Zyklen aus waagerechter, frei hängender oder liegender Lagerung bei 220°C für 1h mit anschließendem Abkühlen auf Raumtemperatur unterworfen. Für die Temperaturbeständigkeit wird nach den 10 Zyklen keine Deformierung, kein Abtropfen und kein Abschmelzen des Mantels festgestellt, und bevorzugt weist der Mantel eine ausreichende, insbesondere zumindest 75-90% seiner ursprünglichen elektrischen und mechanischen Beständigkeit auf.

Die Dauertemperaturbeständigkeit, vorzugsweise gemäß ISO 14572, wird mit dem folgenden Verfahren bestimmt: Nach Lagerung für 3000h bei -40°C bis 150°C wird das Kabel aufgewickelt, abgewickelt und der Mantel wird optisch geprüft. Für die Dauertemperaturbeständigkeit weist der Mantel keine Risse auf und das Kabel besteht die Spannungsprüfung bei 1kV Wechselstrom.

Das erfindungsgemäße Kabel weist eine feste Verbindung, insbesondere eine stoffschlüssige wasserdichte Verbindung, zwischen Mantel und Kupplungsteil auf, die insbesondere gegen Temperaturschwankungen beständig ist, z.B. beständig gegen Temperaturschwankungen aus 100 Zyklen, bevorzugt 150 bis 200 Zyklen, von denen jeder Zyklus jeweils das Erwärmen auf zumindest 80°C, bevorzugt auf 120°C und Kühlen auf 0 bis 4°C durch Einbringen in Eiswasser umfasst oder daraus besteht. Solche periodischen Temperaturschwankungen sind auch als Eiswasser-Schock-Prüfung bekannt, beispielsweise Erwärmen auf 80°C oder 120°C gefolgt von Kühlen auf 0-4°C durch Einbringen in Eiswasser für 100 Zyklen.

Es hat sich gezeigt, dass das erfindungsgemäße Kabel eine Festigkeit der Verbindung zwischen Mantel und Kupplungsteil aufweist, sowohl vor als auch nach der Eiswasser-Schock-Prüfung, die einer Druckprüfung standhält, bei der die Verbindung mit einem Luftdruck von 0,5 oder 1 bar leitungsseitig oder kupplungsteilseitig beaufschlagt wird. Das Standhalten bei diesem anliegenden Innendruck wird durch Fehlen von Blasenaustritten für 30s oder 1min aus dem im Wasserbad angeordneten Kabel nachgewiesen.

### Genaue Beschreibung der Erfindung

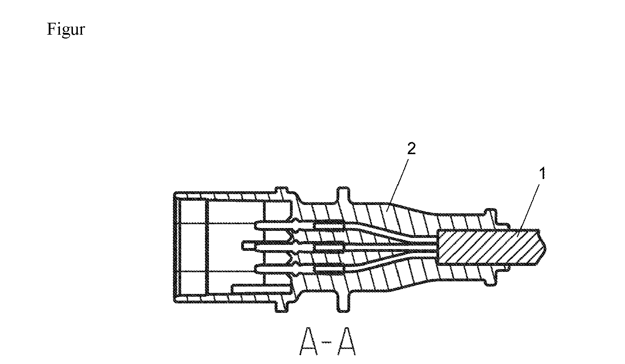

Die Erfindung wird nun genauer mit Bezug auf die Figur beschrieben, die schematisch ein erfindungsgemäßes Kabel mit einem endständig durch Spritzguss hergestellten Kupplungsteil zeigt.

Die Figur zeigt schematisch eine bevorzugte Ausführungsform des erfindungsgemäßen Kabels, das ein durch Spritzguss unmittelbar um einen endständigen Abschnitt des Mantels 1 hergestelltes Kupplungsteil 2 aufweist, das den Mantel 1 des Kabels abschnittsweise umfänglich umgibt und entsprechend der bevorzugten Ausführungsform einstückig ist und an den Leitern der in dem Kabel enthaltenen Adern endständig angeschlossene Kontaktstücke in Ausnehmungen hält, so dass die Kontaktstücke durch eine Zugangsöffnung für ein Gegenstück des Kupplungsteils zugänglich sind.

Im Einzelnen kann das Verfahren zur Herstellung des Kupplungsteils an einem Kabel mit Mantel 1 aus einer Polymermischung auf Basis von strahlenvernetztem thermoplastischem Polyurethan die folgenden Schritte aufweisen:
- Bereitstellen eines Kabels mit einem Mantel 1, der aus einer Polymermischung besteht, die als Polymerbestandteil strahlenvernetztes thermoplastisches Polyurethan aufweist oder daraus besteht,
- Abisolieren zumindest einer Ader des Kabels und Kontaktieren des Leiters mit einem Kontakt,
- wobei insbesondere der Kontakt optional in einer Ausnehmung eines Kontaktträgers angeordnet ist, oder alternativ der Kontaktträger einstückig mit dem Kupplungsteil 2 ausgebildet wird,
- Herstellen eines Kupplungsteils 2 durch Spritzgießen einer Polymermischung um zumindest einen Abschnitt des Kabelmantels, deren Polymerbestandteil ein thermoplastisches Polymer aufweist oder daraus besteht, wodurch die Mischung eine stoffschlüssige Verbindung mit zumindest einem umfänglich geschlossenen Abschnitt des Mantels 1 eingeht.
- Optional kann das Spritzgießen der das Kupplungsteil 2 bildenden Polymermischung so erfolgen, dass diese einen Kontaktträger umgreift, bevorzugt bis maximal an die der Anschlußseite gegenüberliegende Kontaktseite des Kontaktträgers.

Das Kabel wies die Dauertemperaturbeständigkeit für 3000h bei 150°C und die Temperaturbeständigkeit für 10 Zyklen von bis zumindest 1 h bei 200°C oder bei 220°C auf.

Ein nach diesem Verfahren hergestelltes Kabel mit durch Spritzguß hergestelltem Kupplungsteil wurde der Eiswass-Schock-Prüfung mit 100 bis 200 Zyklen des Erwärmens auf 80°C oder 120°C, jeweils mit Abkühlen durch Eintauchen in eishaltiges Wasser unterworfen. Das Kabel wies keine sichtbaren Schäden auf.

Anschließend wurde das Kabel von Seiten der Leitung und alternativ von Seiten des Kupplungsteils mit 0,5 oder 1 bar Luftdruck beaufschlagt, z.B. mittels einer Bohrung in das Kabelinnere bzw. das Innere des Kupplungsteils angrenzend an die Verbindung zwischen Kabelmantel und Kupplungsteil, so dass der anliegende Überdruck von innen auf diese Verbindung wirkte. Es wurde keine aus der Verbindung austretende Luft festgestellt, z.B. nach Eintauchen des Kabels einschließlich der Verbindung in Wasser.

Diese Ergebnisse zeigen, dass das Kupplungsteil mit der geforderten Beständigkeit eine wasser- und druckdichte Verbindung mit dem temperaturbeständigen Mantel des Kabels bildet.

## Patentansprüche

1. Kabel mit zumindest einer Ader in einem Mantel (1) mit spritzgegossenem Kupplungsteil (2) aus einer Polymermischung, die als Polymerbestandteil einen Thermoplasten enthält und abschnittsweise den Mantel umfassend feuchtigkeitsdicht am Mantel anliegt, **dadurch gekennzeichnet, dass**
der Mantel (1) aus einer Polymermischung besteht, deren Polymerbestandteil strahlenvernetztes thermoplastisches Polyurethan aufweist, wobei die wasserdichte Verbindung des Mantels (1) zum Kupplungsteil (2) durch die Kontaktfläche zwischen Mantel (1) und Kupplungsteil (2) ausgebildet ist.

2. Kabel nach Anspruch 1, **dadurch gekennzeichnet, dass** das Kupplungsteil (2) einstückig ist und Kontaktstücke, die endständig an den Leitern des Kabels angebracht sind, in Ausnehmungen hält.

3. Kabel nach einem der voranstehenden Ansprüche, **dadurch gekennzeichnet, dass** die wasserdichte Verbindung zwischen Kupplungsteil (2) und Mantel (1) des Kabels auch nach einer Schockprüfung aus 100 Zyklen von jeweils Erwärmen auf zumindest 80°C und Kühlen auf 0-4°C durch Einbringen in Eiswasser beständig ist.

4. Kabel nach einem der voranstehenden Ansprüche, **dadurch gekennzeichnet, dass** der Mantel eine Alterungsbeständigkeit gegenüber zumindest 10 Zyklen bei 220°C für 1h mit Abkühlen auf Raumtemperatur und eine Dauertemperaturbeständigkeit gegenüber der Lagerung für 3000h bei einer Temperatur von -40°C bis 150°C aufweist.

5. Kabel nach einem der voranstehenden Ansprüche, **dadurch gekennzeichnet, dass** die wasserdichte Verbindung des Mantels (1) zum Kupplungsteil (2) eine Beständigkeit gegenüber einer Eiswasser-Schock-Prüfung aufweist, die aus zumindest 100 Zyklen besteht, von denen jeder Zyklus jeweils das Erwärmen auf zumindest 80°C und Kühlen auf 0 bis 4°C durch Einbringen in Eiswasser umfasst.

6. Kabel nach einem der voranstehenden Ansprüche, **dadurch gekennzeichnet, dass** die wasserdichte Verbindung gegenüber einer leitungsseitigen oder kupplungsteilseitigen Druckbeaufschlagung von zumindest 0,5 bar oder von zumindest 1 bar beständig ist.

7. Kabel nach einem der voranstehenden Ansprüche, **dadurch gekennzeichnet, dass** die Polymermischung des Kupplungsteils (2) als Polymerbestandteil thermoplastisches Polyurethan, Polyamid oder Polybutylenterephthalat enthält.

8. Verwendung eines Kabels nach einem der voranstehenden Ansprüche als Anschlussleitung mit einer Kurzzeittemperaturbeständigkeit bis 220°C für 1 Stunde bis zu 10 Zyklen sowie einer Dauertemperaturbeständigkeit von -40°C bis 150°C für 3000 h.

9. Verfahren zur Herstellung eines Kabels mit spritzgegossenem Kupplungsteil (2) durch Umspritzen eines endständigen Abschnitts des Kabels einschließlich dessen Mantels (1) mit einer Polymermischung, deren Polymerbestandteil einen Thermoplasten aus der Gruppe aufweist, die Polyamid, thermoplastisches Polyurethan, Polybutylenterephthalat und Mischungen dieser umfasst, **dadurch gekennzeichnet, dass** das Kabel einen Mantel (1) aus einer Polymermischung aufweist, deren Polymerbestandteil aus strahlenvernetztem thermoplastischen Polyurethan besteht, wobei eine wasserdichte Verbindung zwischen Kupplungsteil (2) und Mantel (1) durch das unmittelbare Umspritzen eines umfänglich geschlossenen Mantelabschnitts mit der Polymermischung des Kupplungsteils erzeugt wird.

10. Verfahren nach Anspruch 9, **dadurch gekennzeichnet, dass** der Mantel (1) eine Alterungsbeständigkeit gegenüber zumindest 10 Zyklen bei 220°C für 1h mit Abkühlen auf Raumtemperatur und eine Dauertemperaturbeständigkeit gegenüber der Lagerung für 3000h bei einer Temperatur von -40°C bis 150°C aufweist.

11. Verfahren nach Anspruch 9 oder 10, **dadurch gekennzeichnet, dass** die wasserdichte Verbindung des Mantels (1) zum Kupplungsteil (2) eine Beständigkeit gegenüber einer Eiswasser-Schock-Prüfung aufweist, die aus zumindest 100 Zyklen besteht, von denen jeder Zyklus jeweils das Erwärmen auf zumindest 80°C und Kühlen auf 0 bis 4°C durch Einbringen in Eiswasser umfasst.

12. Verfahren nach einem der Ansprüche 9 bis 11, **dadurch gekennzeichnet, dass** die wasserdichte Verbindung des Mantels (1) zum Kupplungsteil (2) eine Beständigkeit gegenüber einer leitungsseitigen oder kupplungsteilseitigen Druckbeaufschlagung von zumindest 0,5 bar oder von zumindest 1 bar aufweist.
